# EUROPEAN PATENT APPLICATION

(11) **EP 1 204 057 A1**
(43) Date of publication of application: **08.05.2002**
(21) Application number: 01307679.9
(22) Date of filing: 10.09.2001
(51) Int. Cl.: G06F 17/60

(54) **Vehicle repair system**

(30) Priority: 09.09.2000 GB 0022286
(71) Applicant: Bates, Geoffrey, Bessacarr, Doncaster DN4 6QG (GB)
(72) Inventor: Bates, Geoffrey, Bessacarr, Doncaster DN4 6QG (GB)
(74) Representative: Wood, Graham

(57) **Abstract**

The invention relates to an information system for use with the repair of vehicles. The system comprises a database with basic vehicle details entered at the commencement of the repair and is then updated at intervals during repair so that the vehicle owner or operator, upon accessing the system, can receive an updated and accurate indication of the vehicle repair status. The system is provided on an internet site. Thus, the vehicle operator can maintain a watching brief on the repair of their vehicle without the need to visit the vehicle or make contact with the repair centre personnel and obtain repair information regardless of the actual location of the vehicle.

## Description

The invention to which this application relates is a repair system for vehicles and in particular, but not necessarily exclusively, to vehicles which are for commercial purposes and may be operated as part of a fleet of vehicles.

Frequently, when commercial vehicles breakdown or are in an accident they can be taken by a breakdown recovery company to their premises from which point the operator of the vehicle is charged a rental until the vehicle is authorised by the insurer to be taken to a vehicle repair workshop. Furthermore the vehicle may not be taken to the most convenient workshop for the vehicle operator but instead is taken to a workshop which meets with the insurers approval. Yet further, the commercial vehicle operator then has to arrange for the hire of a vehicle to replace that which is being repaired without having any true or accurate or updated indication as to when the original vehicle is repaired. This currently adds up to an unsatisfactory service for the vehicle operator and makes it difficult for the operator to plan their logistical requirements as accurately as they would like. It can also mean that the cost to the operator in terms of insurance premiums due to unnecessary delay and rental expenses can be significant.

The aim of the present invention is to provide a system both for the management of repair of a commercial vehicle and also for the management of information relating to the repair and the provision of said information to the vehicle operator to allow them to plan with greater detail and accuracy; the management and control of new build vehicles and bodies and placing of on-line orders and specifications.

In a first aspect of the invention there is provided a vehicle repair system for a vehicle under repair, said system including a vehicle repair centre entering the details of said vehicle into the system database, said details including a listing of the necessary repairs and/or any vehicle parts required and/or labour time required and/or cost estimation, and characterised in that from commencement of the repair until completion, the database can be updated as the repair progresses to provide an accurate estimation of the projected completion date for the vehicle repair and said information system is provided on a designated site which is selectively accessible from a remote location by the owner or operator of the vehicle.

In one embodiment the owner or operator of said vehicle is allocated a security code which allows access to information for the particular vehicle under repair. In a further or alternative embodiment the owner or operator of a group of vehicles which subscribes to the system is provided with a security code which allows access to repair information for any of the said group of vehicles under repair at that time.

In accordance with the invention the vehicle owner or operator can access the system as often as desired to maintain a check on the progress of the vehicle repair.

In accordance with the system the vehicle requiring repair can be taken to the closest available repair centre location to the vehicle when the repair is required and the vehicle operator can access the site regardless of their particular location with respect to the vehicle.

In a preferred embodiment the information system relating to the progression of repairs can be expanded to indicate the situation of a vehicle prior to the repair work starting via a vehicle recovery system provided as part of the same service. This avoids the need for the vehicle to be picked up by a recovery service and then stored prior to being passed on to the repair centre.

A further part of the information system is an onward shipment tracking system which allows cargo which was being carried at the time of the breakdown or accident to be transported onwardly with the vehicle operator able to track the cargo via the information system to identify the location and status of the cargo thereafter until delivered.

Typically the vehicle repair system includes information relating to the vehicle type and the vehicle owner or operator can request via the system that the system operator arranges the provision of an equivalent vehicle for the duration of the repair.

In a preferred embodiment the vehicle repair system includes visual images of the vehicle prior to and/or during repair and in addition to the use of these images to give a clear indication to the owner or operator of the vehicle of the condition of the vehicle at various stages, the visual images can be relayed via the system to the vehicle owner or operator and any other authorised parties prior to the repair commencing so that the repair can be authorised.

Typically the vehicle repair system is provided on an internet site which can be accessed by the vehicle owner or operator. In one embodiment the internet site has a first level which can be accessed by any user and which gives general information about the system, and a second, secure, level which is only accessible by the owners or operators of vehicles who subscribe to the system. In one embodiment the secure level of the internet site is only accessible by subscribers and specific details of a vehicle repair can only be accessed by the owner or operator of the vehicle by use of a security code allocated for that particular vehicle repair.

In one embodiment the system can be utilised in addition to or instead of a vehicle repair to provide an indication of the progress of the building of a vehicle or part of a vehicle

Thus, in accordance with the invention the vehicle operator can maintain a watching brief on the repair or build of the vehicle in question without the need to visit the vehicle or even speak to the repair centre, regardless of the actual location of the vehicle.

A specific embodiment of the invention is now described with reference to the accompanying diagrams; wherein
Figure 1 illustrates pages of the vehicle repair system site according to the invention relating to the estimated requirements for a repair to a vehicle;
Figure 2 illustrates a page of the vehicle repair system site relating to the labour time requirements; and
Figure 3 illustrates a repair progression page from the vehicle repair system site.

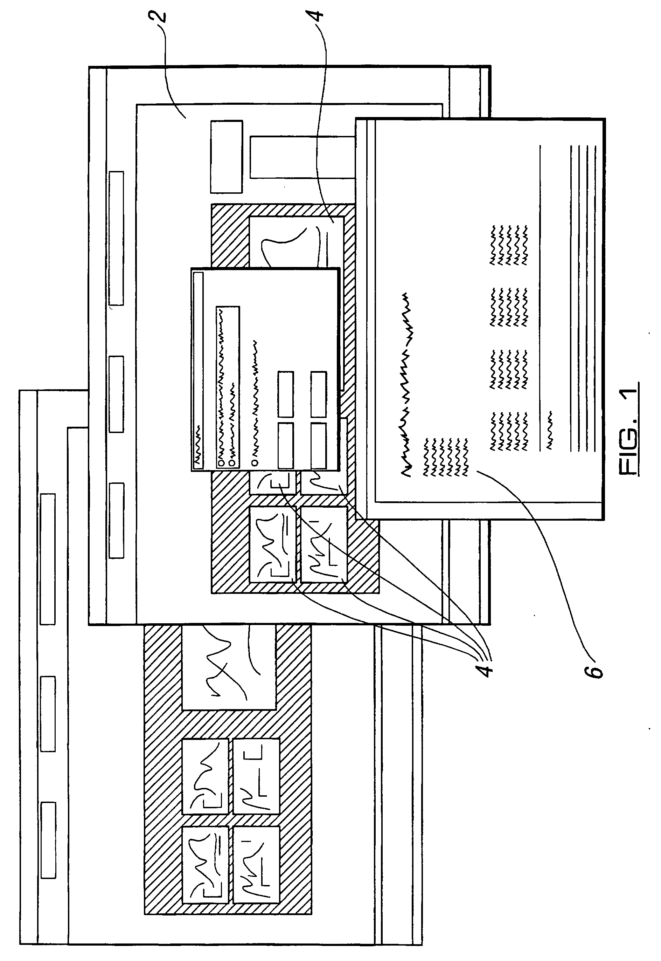

Upon a repair becoming necessary to a vehicle such as an articulated goods vehicle, perhaps due to a crash, the vehicle repair system in accordance with the invention and to which the vehicle owner or operator subscribes, commences. In the first instance, the nearest available repair centre is identified and the vehicle taken to that location. At the location, the system, with reference to Figure 1, allows the production of an estimate for the repair. Also provided at this stage is a first page 2 which includes visual images 4 of the vehicle on which the repair is required. The images can be viewed by the vehicle operator, hence allowing them to have an accurate indication of the damage. The images can also be accessed by an insurer to authorise the repair work if required. A second page 6 can also be developed which allows the generation of an estimate of the cost of the repair work required.

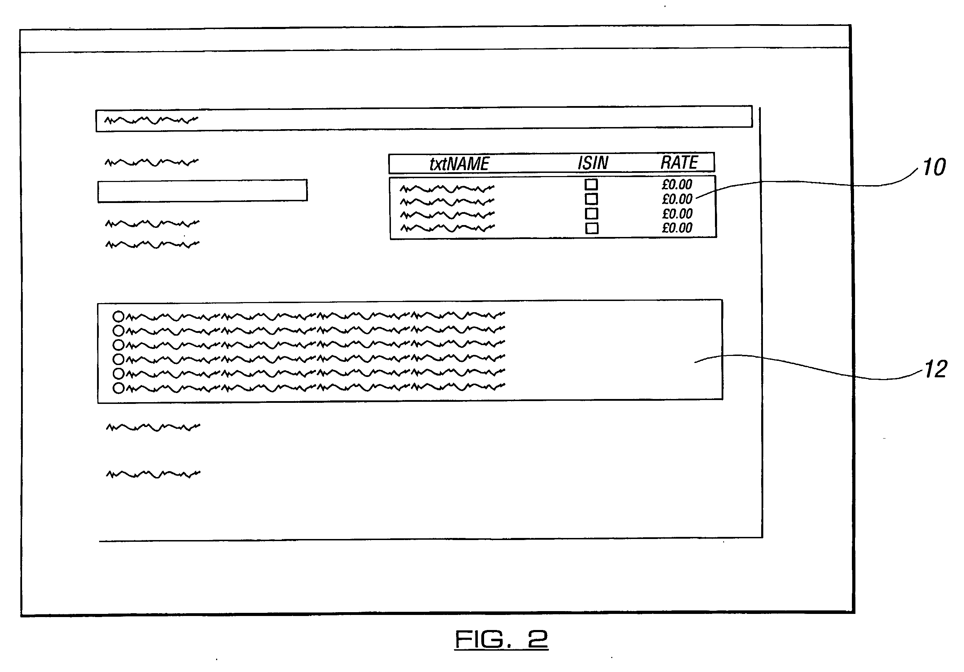

Figure 2 illustrates a further page 8 which can be constructed as part of the system and this includes an indication of the operators who will be working on the repair 10, the rate of labour and the time required. The main information window 12 indicates the work required, the time estimated for each part of the work, and, when completed, an indication of the actual time taken.

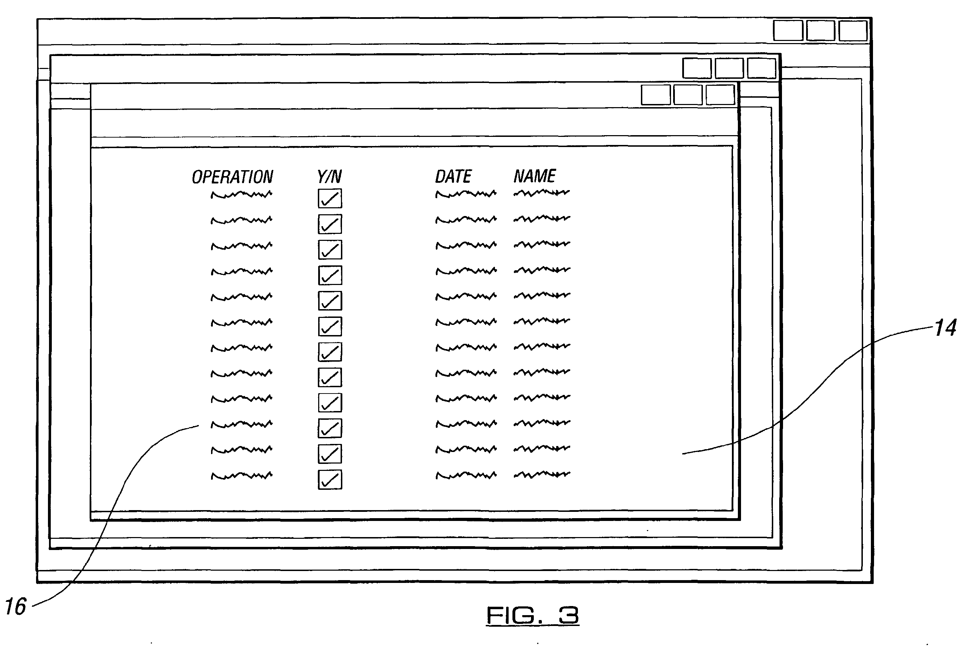

Figure 3 illustrates a further page 14 which provides a checklist 16 of the various stages of the recovery and repair process for the vehicle and, when each particular stage is completed provides an indication of the completion.

The examples given in the Figures are only some of the information pages which can be provided and accessed from a remote location via the internet as part of the vehicle repair system provided in accordance with the invention.

A practical example is now provided of use of the vehicle repair system. If a van is damaged in a collision in, say Surrey UK, and the vehicle operator is based in Manchester UK, some 350 miles removed then, in accordance with the invention, if the operator of the van subscribes to the system of the invention, the system provider will arrange for the recovery of the van and transport to a repair centre of a member of the repair system. The centre location selected will typically be that which is the closest member of the system to the location of the van breakdown. Immediately therefore, costs are reduced because there is no delay or storage of the van in a vehicle recovery organisation facility and hence no storage charge made by them.

In many instances the repair centre may be able to authorise the repair on behalf of the insurer at which stage information pages such as those pages shown in the Figures can be generated. At the same time the vehicle operator is given an access code which allows them to visit the vehicle repair system website and access the specific pages generated in relation to the van. Furthermore, these pages of information will be linked to the repair centre and repair system and as the repair progresses so the information pages are updated. By providing this update, the vehicle operator can be confident that they are aware of what is going on with the repair even from their remote location and without the need for the operator to feel the need to bring the van to a closer location for repair. It should also be appreciated that although the example given relates to the breakdown of the van relates to a breakdown in the same country as the operator location, the vehicle repair system of eh invention can be utilised across country borders.

Thus the vehicle repair system provides in one embodiment data base compilation as data is continually captured from all the repair centres which are part of the system and for all subscribers vehicle under repair so that the same is available through the system. As each centre is linked to the system the data base is built up of any of opinion times, compared to actual times taken and in the process, thus delivering a reliable and accurate set of repair times relating to each Make, Model and Type of vehicle including Body Type and Manufacturer.

Furthermore, by the user selecting the vehicle make, type & then specification, the repair times for each panel, assembly or sub assembly can be accessed. The times for each of the components can be listed, along with, for example, any paint material quantities & prices, as well as the panel/parts price.

In one embodiment there are three levels of Access to the vehicle repair system comprising full access to network repair centres. And vehicle owners and operators access to the vehicle repair information; intermediate access which is available to any dedicated commercial vehicle repair centre and is password & access code protected and pay per use where any registered repair centre may access the data base information.

## Claims

1. A vehicle repair system for a vehicle under repair, said system including a vehicle repair centre entering the details of said vehicle into the system database, said details including a listing of the necessary repairs and/or any vehicle parts required and/or labour time required and/or cost estimation, and **characterised in that** from commencement of the repair until completion, the database can be updated as the repair progresses to provide an accurate estimation of the projected completion date for the vehicle repair and said information system is provided on a designated site which is selectively accessible from a remote location by the owner or operator of the vehicle.

2. A vehicle repair system according to claim 1 **characterised in that** the owner or operator of said vehicle is allocated a security code which allows access to information for the particular vehicle under repair.

3. A vehicle repair system according to claim 1 **characterised in that** the owner or operator of a group of vehicles which subscribes to the system is provided with a security code which allows access to repair information for any of the said group of vehicles under repair at that time.

4. A vehicle repair system according to claim 1 **characterised in that** the vehicle owner or operator can access the system as often as desired to maintain a check on the progress of the vehicle repair.

5. A vehicle repair system according to claim 1 **characterised in that** the vehicle requiring repair is transported to the closest available repair location and the vehicle operator can access the system regardless of the particular location of the vehicle.

6. A vehicle repair system according to claim 1 **characterised in that** the system indicates the situation of a vehicle prior to the repair work starting via a vehicle recovery system.

7. A vehicle repair system according to claim 1 **characterised in that** the system includes an onward shipment tracking system so that any cargo which was being carried by the vehicle at the time of the repair being required and is transported onwardly, can be tracked by the vehicle owner or operator via the system to identify the location and status of the cargo thereafter until delivered.

8. A vehicle repair system according to claim 1 **characterised in that** the system includes information relating to the vehicle type and the vehicle owner or operator can request via the system that the system operator arranges the provision of an equivalent vehicle for the duration of the repair.

9. A vehicle repair system according to claim 1 **characterised in that** the system includes visual images of the vehicle prior to and/or during repair.

10. A vehicle repair system according to claim 9 **characterised in that** prior to the repair being authorised said visual images can be relayed via the system to the vehicle owner or operator and any other authorised parties.

11. A vehicle repair system according to claim 1 **characterised in that** the site on which the system is provided is an internet site which can be accessed by the vehicle owner or operator.

12. A vehicle repair system according to claim 11 **characterised in that** the internet site has a first level which can be accessed by an y user and which gives general information about the system, and a second, secure, level which is only accessible by the owners or operators of vehicles who subscribe to the system.

13. A vehicle repair system according to claim 12 **characterised in that** the secure level of the internet site is only accessible by subscribers and specific details of a vehicle repair can only be accessed by the owner or operator of the vehicle by use of a security code allocated for that particular vehicle repair.

14. A vehicle repair system according to claim 1 **characterised in that** in addition to or instead of a vehicle repair the system is used to provide an indication of the progress of the building of a vehicle or part of a vehicle.
